# EUROPÄISCHE PATENTSCHRIFT

(11) **EP 1 743 905 B1**
(45) Veröffentlichungstag und Bekanntmachung des Hinweises auf die Patenterteilung: **09.11.2011**
(21) Anmeldenummer: 06014656.0
(22) Anmeldetag: 14.07.2006
(51) Int. Cl.: C08B 5/08, C09D 101/18, C06B 21/00

(54) **Verfahren und Vorrichtung zur Herstellung von phlegmatisiertem Cellulosenitrat**
Process and apparatus for the manufacture of stabilised cellulose nitrate
Procédé et appareil pour la préparation de nitrate de cellulose stabilisé

(30) Priorität: 15.07.2005 DE 102005033089
(43) Veröffentlichungstag der Anmeldung: 17.01.2007
(73) Patentinhaber: Hagedorn AG, 49078 Osnabrück (DE)
(72) Erfinder: Hemelt, Paul, 49716 Meppen (DE); Meyer, Paul Gerhard, 49808 Lingen (DE)
(74) Vertreter: Busse & Busse

(56) Entgegenhaltungen:
- EP-A1- 0 707 037
- BE-A- 554 975
- DE-A1- 4 038 582
- GB-A- 1 336 532

## Beschreibung

Die Erfindung betrifft ein Verfahren zur Herstellung von phlegmatisiertem Cellulosenitrat gemäß dem Oberbegriff des Anspruchs 1 sowie eine Vorrichtung zur Durchführung des Verfahrens gemäß dem Oberbegriff des Anspruchs 8.

Es ist bekannt, Cellulosenitrat mit bis zu 12,6 % Stickstoffgehalt durch Veresterung von Cellulosen mit Nitriersäuren herzustellen, wobei aus dem niedrigveresterten Cellulosenitrat durch Wasserwäsche die Nitriersäure zu entfernen ist und danach zur Herabsetzung der Entzündungsgefahr das eine fasrige Struktur aufweisende Cellulosenitrat zu phlegmatisieren ist. Dazu erfolgt ein Einmischen von Weichmachern oder die Anfeuchtung mittels Alkoholen oder Wasser. Das insbesondere angefeuchtete Cellulosenitrat weist dabei einen Feuchtigkeitsgehalt von 30 % bis 35 % auf. Wird bei diesem niedrigveresterten Cellulosenitrat ein Anfeuchtungsgrad von 25 % unterschritten, ist dieses Produkt als "explosiver Stoff' zu behandeln (Europäisches Übereinkommen vom 30.09.1957 über die internationale Beförderung gefährlicher Güter auf der Straße (ADR), Ordnung für die internationale Eisenbahnbeförderung gefährlicher Güter (RID), jeweils in der Fassung von Juni 2001). Bei einer Phlegmatisierung des Cellulosenitrats mit Weichmachern muß dessen Gehalt mindestens 18 % betragen, so daß das Cellulosenitrat in Form farbloser NC Chips ohne Beschränkungen in den Verkehr gebracht werden kann.

Bei einer faserförmigen, angefeuchteten Lieferform des Cellulosenitrats werden Schüttgewichte im Bereich von 200 g/l bis 350 g/l erreicht. Das mit einem Weichmacher phlegmatisierte Cellulosenitrat weist ebenfalls nur eine Schüttdichte von 300 g/l bis 450 g/l auf. Beim Transport solcher Produkte wirken sich diese niedrigen Schüttdichten nachteilig durch entsprechend hohe Verpackungs- und Versandkosten aus. Deshalb werden bisher fasrige Cellulosenitrate in jeweilige Verpackungsgebinde, beispielsweise in Trommeln oder Kartons, meistens dadurch eingebracht, daß eine zusätzliche Stampfung durchgeführt wird. Damit ist zwar das Schüttgewicht im Sinne einer Transportoptimierung erhöht, gleichzeitig verschlechtert sich jedoch die Rieselfähigkeit des gestampften Cellulosenitrats und bei nachfolgender Entleerung der Verpackungsgebinde sowie beim späteren Auflösen im Lösemittel ist ein erhöhter Aufwand erforderlich.

Die BE-A-554975 offenbart ein Verfahren zur Herstellung von Cellulosenitratpulver, das Weichmacher enthält und zur Herstellung von Beschichtungen verwendet wird. Hierzu werden Nitrocellulosespäne und der Weichmacher in eine komplett geschlossenen Mischkammer eingeführt, in der zwei zylinderförmige Parallelrotoren laufen, die ineinandergreifende Ausstülpungen aufweisen, In der Kammer wir die Nitrocellulose mit dem Weichmacher vermischt. Das Cellulosenitrat weist einen Stickstoffgehalt von etwa 12% auf.

Bei einem Verfahren gemäß GB 871,299 und auch gemäß GB A 1 336 532 wird bereits eine Verdichtung und Komprimierung von feuchtem fasrigem Cellulosenitrat vorgeschlagen, wobei das Cellulosenitrat zwischen zwei gegenläufigen Walzen einer Pressung ausgesetzt wird und das dabei erhaltene Cellulosenitrat wird anschließend zum Transport in einem zusätzlichen Aggregat in kleine Stücke gebrochen. Mit diesem Verfahren ist jedoch gleichzeitig eine Entfeuchtung des Cellulosenitrats verbunden, da dieses mit einem Anfeuchtungsgehalt von unter 25 % vorliegt und die so hergestellten NC-Stücke als Explosivstoff einzuordnen sind. Außerdem hat sich gezeigt, daß es bei dieser Art der Walzenverdichtung unter Einwirkung der hohen Drücke zu Selbstentzündungen des Cellulosenitrats kommen kann und aufgrund der im Walzenspalt vorhandenen großen Mengen von Cellulosenitrat besteht bei schnellen Abbränden eine erhöhte Gefahr für das Bedienpersonal. Auch bei einem Verfahren gemäß US-A-5,378,826 treten die vorbeschriebenen Nachteile durch zu geringe Feuchte der NC-Stücke auf.

Die EP 0 707 037 beschreibt ein Verfahren und eine Vorrichtung zur Herstellung von plastifiziertem Cellulosenitrat, bei dem angefeuchtete Nitrocellulose mit einem Stickstoffgehalt von 12,6 Gew.-% und versetzt mit einem Phlegmatisierungsmittel mit Hilfe eines Walzenaggregates verdichtet werden. Das Walzenaggregat besteht dabei aus zwei Scherwalzen, die jeweils Schernuten aufweisen, in denen die verdichtete Nitrocellulose zu den Walzenenden hin transportiert wird. Die so hergestellte, verdichtete Nitrocellulose wird anschließend mit Hilfe von Abstreifelementen zerkleinert

Gemäß EP 0 369 246 B1 ist ein Verfahren bekannt, bei dem das Cellulosenitrat durch Zugabe eines schwerflüchtigen Weichmachers zu einem verdichteten, ausreichend phlegmatisierten und rieselfähigen Cellulosenitrat mit möglichst geringem Wassergehalt verarbeitet wird. Dazu ist ein offener Doppelschneckenextruder vorgesehen, der mit zwei parallel und horizontal angeordneten, gegenläufig arbeitenden Scherwalzen ein Scherwalzenaggregat bildet. In einem kontinuierlichen Verfahrensablauf wird das zugeführte Cellulosenitrat unter gleichzeitiger Verdichtung zu den Walzenenden gefördert, wobei über die Walzenlänge und im Walzenspalt ein Knetprozeß stattfindet, der zu einer Druchgelatinierung des Cellulosenitrats führt. Die dabei auftretenden Reibungskräfte erwärmen das Cellulosenitrat bis zum Beginn der thermischen Produktschädigung, so daß das Verfahren insgesamt instabil ist. Die endseitig am Walzenaggregat zu entnehmenden Cellulosenitrat-Teile weisen bei der späteren Anwendung eine nachteilig schlechte Löslichkeit auf und durch eine Staubbildung der nur noch einen Restwassergehalt von 1,5 % aufweisenden Cellulosenitrat-Strukturen können bei der Handhabung elektrostatische Aufladungen erfolgen, die zu einer latenten Abbrandgefahr führen.

Gemäß einem Vorschlag in DE 195 08 230 wird durch einen veränderten Verfahrensablauf eine die Löseeigenschaften des Cellulosenitrats verbessernde Gelatinierung durch reduzierte Knetarbeit und geringere Friktionskräfte erreicht, so daß bei gesteigerter Leistung ein verbessertes phlegmatisiertes Cellulosenitrat bereitgestellt wird.

Gemäß einem Verfahren in DE 199 09 230 A1 wird das feuchte Cellulosenitrat auf einem eine mit Löchern versehene Platte als Matrize aufweisenden Kollergang aufgelegt, so daß das Cellulosenitrat im Bereich einer von der waagerechten Platte gebildeten Umformebene überrollbar ist und dabei durch seitliche Begrenzungsteile auf dieser Platte gehalten wird. Durch die umlaufenden Räder (Koller) wird jeweils nur ein Teil des feuchten Cellulosenitrats durch die jeweiligen Löcher nach unten gedrückt, während die verbleibende Teilmenge durch Reibungskräfte horizontal weiterbewegt werden muß, um danach beim nächsten Kollerlauf in die Löcher zu gelangen. Damit wird ein betreffend den Eintrag von Reib- und Preßkräften auf das Cellulosenitrat weitgehend ungesteuert ablaufender Granulier-Vorgang durchgeführt, der mit Schädigungen des fasrigen Ausgangsmaterials verbunden ist. Durch wiederholte Pressung des im Kollergang über mehrere Umlaufphasen der Koller-Räder gehaltenen fasrigen NC-Materials werden undefinierte Reib- und Druckkräfte eingeleitet, da das NC-Material nur über die Löcher aus dem Kollergang ausgefördert werden kann. Die damit als Folge punktueller Überpressungen am NC-Material erzeugte Inhomogenität führt bei dem unterseitig des Kollergangs entnommenen Cellulosenitrat-Granulat zu einer minderen Produkt-Qualität, die sich in einer wesentlich erhöhten Lösezeit bei späterer Anwendung des Granulat-Zwischenproduktes zeigt.

Die DE 40 38 582 A1 offenbart eine Vorrichtung zur Herstellung von Peletts, insbesondere Holzpeletts. Die Vorrichtung umfasst zwei achsparallel nebeneinander gegenläufig angetriebene Walzenkörper, deren Vllalzenmanteltlächen als Stempel und Matrizen ausgebildet sind. Stempel und Matrizen greifen beim Drehvorgang formschlüssig ineinander und quetschen dabei das zu pelettierende Material mit Hilfe der Stempel durch die Matrize von der Walzenoberfläche weg in Richtung Zentrum, das als Hohlraum innerhalb der Walzen ausgebildet ist. Durch das formschlüssige Ineinandergreifen von Stempel und Matrizen entstehen im Bereich der Quetschung sehr hohe Reibungsenergien. Zudem sind die Walzen in einer umgehend weitgehend geschlossenen Presskammer untergebracht. Sowohl die hohen Reibungskräfte als auch die geschlossene Presskammer würden sehr schnell zu Explosionen führen, wenn mit einer derartigen Vorrichtung das explosive Material Nitrocellulose anstelle von Holz gepresst würde.

Die Erfindung befasst sich mit dem Problem, ein Verfahren und eine Vorrichtung zur Herstellung von phlegmatisiertem Cellulosenitrat gemäß dem Oberbegriff des Anspruchs 1 bzw. 8 zu schaffen, die mit relativ geringem technischem Aufwand eine weitgehend beschädigungsfreie Verarbeitung und schonende Verdichtung des Cellulosenitrats zu einem homogenen Granulat hoher Schüttdichte ermöglichen.

Die Erfindung löst dieses Problem durch ein Verfahren mit den Merkmalen des Anspruchs 1 und eine Vorrichtung mit den Merkmalen des Anspruchs 8. Hinsichtlich weiterer Ausgestaltungen wird auf die Ansprüche 2 bis 7 bzw. 9 und 10 verwiesen.

Durch umfangreiche Versuche wurde festgestellt, daß das eine strang-, faser- oder wollartige Struktur aufweisende Cellulosenitrat (NC) auch in einem an sich bekannten Walzenaggregat zwischen zwei Walzenkörpern schonend zu einem homogenen Granulat bearbeitbar ist. Dabei werden in zumindest einem der Walzenkörper vorhandene Formausnehmungen für eine zwangsgeführte Aufnahme, Verdichtung und Weiterleitung von vertikal zugeführter NC-Strukturwolle genutzt. Das durch eine Querverlagerung in die Formausnehmung eingeformte Cellulosenitrat wird dabei als Teilmenge schonend verdichtet und danach kann ein granuliertes rieselfähiges NC-Zwischenprodukt aus diesen Formausnehmungen des Walzenaggregats entnommen werden. Bei dieser Verfahrensführung ist durch eine verbesserte Steuerung von zwischen den beiden Walzenkörpern ablaufenden Verdichtungs-, Verlagerungs- und Entnahmevorgängen für das zwischen die gegensinnig umlaufenden Walzenkörper eingebrachte Cellulosenitrat eine optimale Granulierung mit homogener Verdichtungsstruktur möglich, so daß das derart durch eine Zwei-Walzen-Pressung erzeugte Produkt als Rohstoff für Lacke, Farben o. dgl. verbesserte Eigenschaften bei der späteren Anwendung aufweist.

Das strang-, faser- oder wollartige Struktur aufweisende Cellulosenitrat wird bei der Zuführung zwischen die beiden Walzenkörper definiert erfaßt und dabei nach Art einer Zwangsführung im wesentlichen vertikal in den Walzenspalt hineingezogen, so daß durch horizontale Druckkräfte eine gleichmäßige Verdichtung dieser Struktur während einer ersten Preßphase erreicht ist und ein Eintrag von Reibkräften vermieden ist. Während des nachfolgenden Einformvorgangs in die Formausnehmungen zumindest eines der Walzenkörper erfolgt eine weiterhin quer zur Zuführrichtung des Cellulosenitrats verlaufende Verdichtung. Das zugeführte Cellulosenitrat wird dabei im sich zunehmend verjüngenden Aufnahme- und Preßspalt gleichmäßig schonend weitergeleitet und zu jeweiligen Randbereichen der Formausnehmung hin verlagert. Hier wird ein Teil des Gellulosenitrats reibungsarm in die Formausnehmung eingedrückt und durch eine Abscherung von jeweiligen vorverdichtete Rest-Strukturen bildenden Teilmengen getrennt, wobei diese weiterbewegt und unter Schwerkraftwirkung aus der Umform- und Querpreßzone ableitbar sind. Mit dieser kontinuierlichen Querpressung wird erreicht, daß die das Granulat in den Formausnehmungen bildenden Teilmengen zu einer Masse mit im Querschnitt weitgehend homogener Struktur verbunden werden.

Aus den Formausnehmungen kann die jeweils zu einem granulierten rieselfähigen NC-Zwischenprodukt verdichtete Teilmenge des phlegmatisierten Cellulosenitrats wahlweise in oder entgegen der Einformrichtung entnommen werden, so daß das NC-Zwischenprodukt eine entsprechend der geometrischen Querschnittsgestaltung der Formausnehmung definierte Granulat-Form aufweist.

Mit dem erfindungsgemäßen Verfahren und unterschiedlichen Vorrichtungs-Ausführungen zu dessen Anwendung wird mit im Vergleich zu bekannten Verfahren erhöhter Produktivität und Qualität auch eine wesentliche Erhöhung der Schüttdichte des NC-Zwischenprodukts erreicht. Das erfindungsgemäße NC-Zwischenprodukt kann dabei durch jeweilige zwischen den zwei Walzenkörpern gesteuert ablaufende Einleitungs-, Zwangsführungs- und Umlenkungsphasen einem vergleichsweise geringeren Umform- und Preßdruck ausgesetzt werden, so daß eine schonendere Verdichtung zu der homogenen Granulat-Struktur führt. In dem erfindungsgemäßen NC-Granulat sind keine mechanisch überbelasteten Faser-Strukturen eingepreßt und diese Homogenität des Produkts ist bei der Anwendung des Lackrohstoffes durch deutlich verbesserte Lösungseigenschaften nachweisbar.

Nach bekannten Verfahren verdichtetes NC-Granulat ("farblose Chips") weisen beispielsweise eine Schüttdichte von 337 g/l auf, während das erfindungsgemäße NC-Zwischenprodukt eine Schüttdichte von 635 g/l erreicht. Bei umfangreichen Vergleichsversuchen unterschiedlicher NC-Zwischenprodukte wurde festgestellt, daß bei dem erfindungsgemäßen NC-Zwischenprodukt die Lösezeit um 25 % verringert wird. Ein Vergleich von gemäß DE 195 08 230 hergestelltem NC-Granulat mit dem erfindungsgemäß hergestellten NC-Zwischenprodukt erbrachte für dieses eine um 50 % bis 70 % verbesserte Lösezeit.

Die schonende Bearbeitung des NC-Zwischenprodukts mit der erfindungsgemäßen Vorrichtung kann auch anhand von Filmbildungseigenschaften bei Verwendungen in Lacken und Farben nachgewiesen werden, wobei für das erfindungsgemäße NC-Granulat in einem Lösungsmittelgemisch eine im Vergleich mit bekannten Produkten deutlich verminderte Trübung nachweisbar ist. Damit werden die geringeren mechanischen Preß-Belastungen bei der zwischen den Walzenkörpern steuerbaren Verdichtung der NC-Faserstruktur deutlich. Durch Messungen ist ebenfalls nachweisbar, daß bei Anwendung des erfindungsgemäßen Verfahrens der Anfeuchtungsgehalt des NC-Zwischenproduktes um weniger als 1 % verändert wird.

Weitere Vorteile des erfindungsgemäßen NC-Zwischenproduktes ergeben sich dadurch, daß dieses gegenüber den bekannten Produkten eine etwa um 50 % reduzierte Abbrenngeschwindigkeit zeigt. Damit trägt die erfindungsgemäße Verdichtung zu einer Erhöhung der Sicherheit bei Transport und Lagerung von granulierten rieselfähigen NC-Zwischenprodukten bei.

Als weiterer Vorteil hat sich gezeigt, daß das Verfahren und die Vorrichtung in erfindungsgemäßer Gestaltung bei einem verminderten technischem Aufwand niedrigere Investitionen in Maschinen und Anlagen erfordert und dabei der einfach steuerbare Verdichtungsprozeß zwischen den an sich bekannten Walzenkörpern bei verminderter Explosionsgefahr einfacher beherrschbar ist.

Weitere Einzelheiten und Vorteile ergeben sich aus der nachfolgenden Beschreibung, in der mehrere Ausführungsbeispiele einer erfindungsgemäßen Vorrichtung anhand der Zeichnungen verdeutlicht sind. In der Zeichnung zeigen:
- Fig. 1: eine Stirnansicht einer zwei gegensinnig drehbare Walzenkörper aufweisenden Bearbeitungsstrecke eines Walzenaggregats,
- Fig. 2: eine Draufsicht der Walzenkörper gemäß Fig. 1,
- Fig. 3: eine vergrößerte Ausschnittsdarstellung der Walzenkörper im Bereich des sich in Förderrichtung gleichmäßig verengenden Walzenspaltes,
- Fig. 4: eine Seitenansicht der Walzenkörper ähnlich Fig. 2,
- Fig. 5: eine Stirnansicht einer zweiten Ausführung des Walzenaggregates mit in Bearbeitungslage befindlichen Walzenkörpern ähnlich Fig. 1,
- Fig. 6: eine vergrößerte Ausschnittsdarstellung des Walzenspaltes im Bereich der Walzenkörper gemäß Fig. 5,
- Fig. 7: eine Seitenansicht des Walzenaggregates gemäß Fig. 5,
- Fig. 8: eine Draufsicht der Walzenkörper gemäß Fig. 5,
- Fig. 9: eine Stirnansicht einer dritten Ausführungsform des Walzenaggregates ähnlich Fig. 1,
- Fig. 10: eine Draufsicht der Walzenkörper gemäß Fig. 9,
- Fig. 11: eine Seitenansicht der Walzenkörper gemäß Fig. 9,
- Fig. 12: eine vergrößerte Ausschnittsdarstellung des Walzenaggregates im Bereich des Walzenspaltes gemäß Fig. 9,
- Fig. 13: eine Abbildung des mit dem erfindungsgemäßen Verfahren granulierten Cellulosenitrats,
- Fig. 14: eine Abbildung ähnlich Fig. 13 mit sortiertem Granulat mit im wesentlichen zylinderförmigen Teilen,
- Fig. 15: eine mit Abmessungen versehene Einzeldarstellung von Teilen des Granulats,
- Fig. 16: eine Abbildung ähnlich Fig. 13 mit quaderförmig granulierten NC-Chips, und
- Fig. 17: eine Abbildung von gemäß dem Stand der Technik erzeugten NC-Chips.

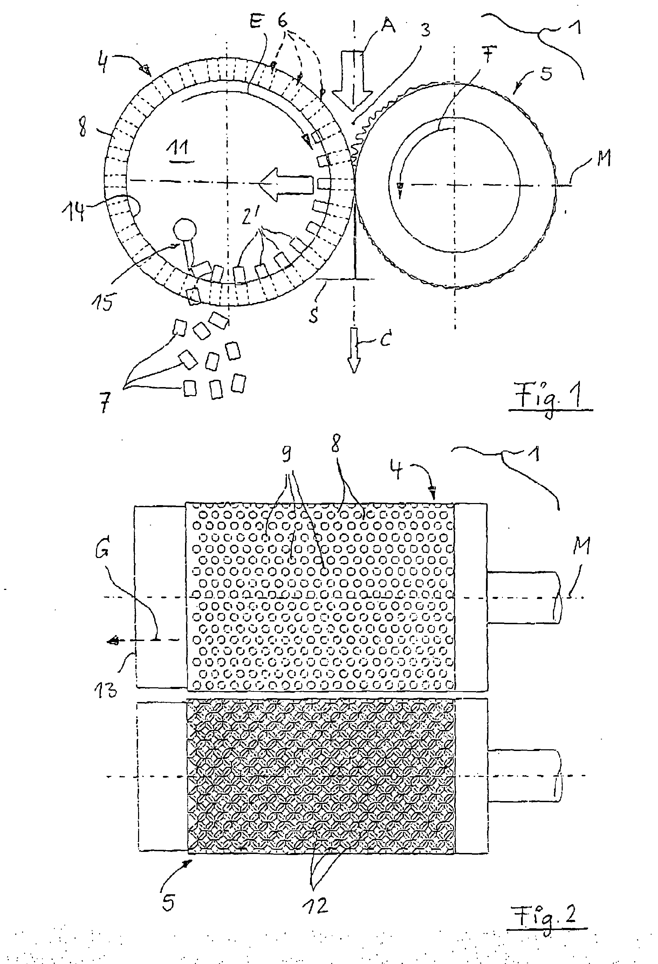

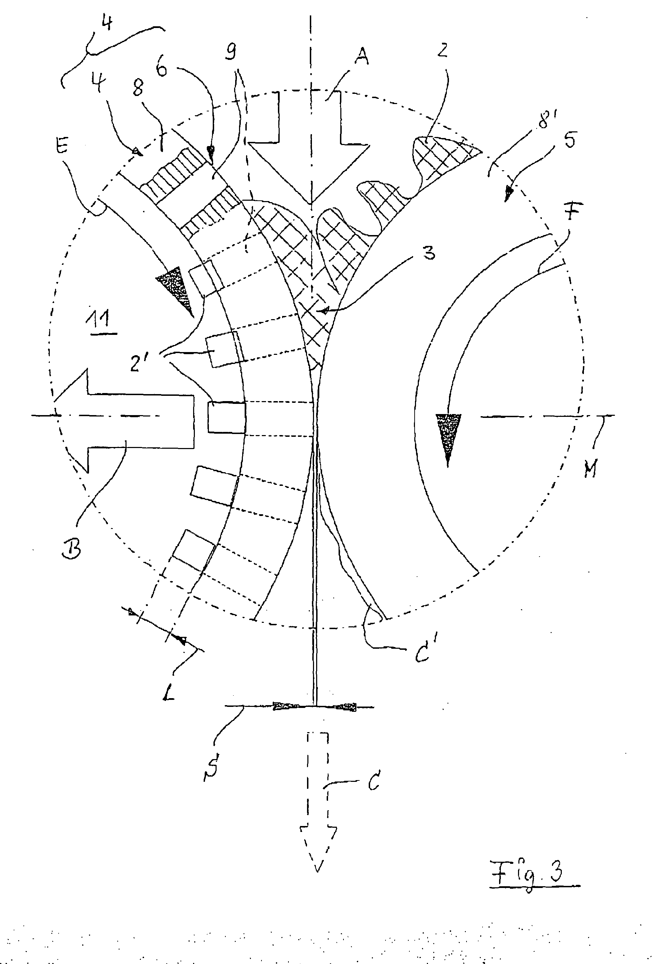

In Fig. 1 ist ein insgesamt mit 1 bezeichnetes Walzenaggregat in einer ersten Ausführungsform dargestellt, auf dem eine Bearbeitung von phlegmatisiertem Cellulosenitrat 2 (Fig. 3) erfolgt. Bei dieser Verfahrensführung wird das angefeuchtete oder weichmacherhaltige Cellulosenitrat 2 mit einem Stickstoffgehalt von 12,6 % oder weniger in einem Walzenspalt 3 zwischen zwei gegensinnig umlaufenden Walzenkörpern 4, 5 bearbeitet (Drehrichtungen gemäß Pfeil E und F).

Bei der erfindungsgemäßen Verfahrensführung ist vorgesehen, daß das mit einer strang-, faser- oder wollartigen Struktur in den Walzenspalt 3 zugeführte Cellulosenitrat (NC) in jeweilige an zumindest einem der Walzenkörper 4, 5 vorgesehene Formausnehmungen 6 eingeformt und dabei zu einem granulierten rieselfähigen NC-Zwischenprodukt 2' weiterbearbeitet wird. Die Prinzipdarstellung gemäß Fig. 1 zeigt, daß das angefeuchtete oder weichmacherhaltige Cellulosenitrat 2 mit im wesentlichen vertikaler Zuführrichtung A tangential zwischen die zwei gegenläufigen Walzenkörper 4, 5 gelangt und dabei in den Bereich des Walzenspaltes 3 eingeführt wird. Dabei wird durch eine quer zur Zuführrichtung A folgende Zwangsführung, Umlenkung und Pressung das Volumen des Cellulosenitrats 2 kontinuierlich verringert und jeweilige Teilmengen der komprimierbaren Struktur des Cellulosenitrats 2 werden zum Erreichen einer optimal auf die jeweilige Materialzusammensetzung abgestimmten Endverdichtung in die jeweiligen Formausnehmungen 6 eingedrückt. Aus diesen Formausnehmungen 6 kann das Cellulosenitrat 2 nunmehr als ein granuliert rieselfähiges NC-Zwischenprodukt 7 entnommen werden (Fig. 1, linke Seite).

Es versteht sich, daß bei diesem Vorgang jeweils nur eine Teilmenge des bei A zugeführten Cellulosenitrats 2 eingeformt und verdichtet wird und eine verbleibende verdichtete Teilmenge (C, C' in Fig. 3) aus dem eine Umformzone definierenden Walzenspalt 3 (Spaltbreite S) abgeleitet bzw. ausgefördert werden kann. Nach dieser Verdichtungsphase ist vorgesehen, daß die zu granuliertem rieselfähigem Cellulosenitrat 2' verdichteten Teilmengen in oder entgegen der Einformrichtung B aus der jeweiligen Formausnehmung 6 entnommen werden können.

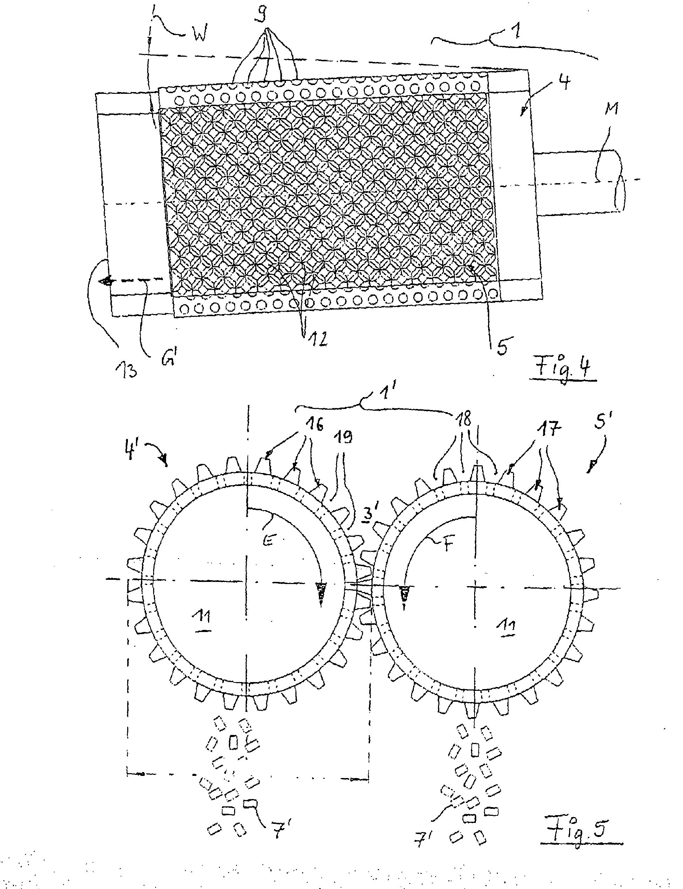

Bei der in Fig. 1 dargestellten Verfahrensführung wird das tangential in den Walzenspalt 3 eingeführte Cellulosenitrat 2 nur in den einen Walzenkörper 4 eingepreßt, wobei ebenso denkbar ist, daß gleichzeitig an beiden Walzenkörpern 4, 5 jeweilige Formausnehmungen 6 vorgesehen sein können, in die die Einpressung erfolgt und damit ein ähnlich der in Fig. 5 gezeigten Verfahrensvariante dargestellte Bearbeitung denkbar ist.

Die Zusammenschau von Fig. 1 bis 4 verdeutlicht, daß das tangential in Schüttrichtung A zu den beiden Walzenkörpern 4, 5 zugeführte Cellulosenitrat 2 im Bereich zumindest einer Walzenkörperwandung 8 in jeweilige die Formausnehmungen 6 bildende Durchlaßöffnungen 9 radial eingedrückt wird. Dabei wird ein entsprechend den Bearbeitungsbedingungen (zugeführte Menge des Cellulosenitrats 2, Größe der Formausnehmungen 6, Drehzahl der Walzenkörper 4, 5) entsprechend schnell ablaufende Formausfüllung erreicht und diese als kontinuierlicher Vorgang so fortgeführt, daß das verdichtete Cellulosenitrat 2' an einem inneren Ende der Durchlaßöffnung 9 als das granulierte Zwischenprodukt 7 (Fig. 1) ableitbar ist.

Aus den Seitenansichten gemäß Fig. 1 und 3 ergibt sich, daß zumindest der Walzenkörper 4 als ein einen inneren Aufnahmeraum 11 aufweisende Hohlwelle ausgebildet ist und damit das Cellulosenitrat 2, 2' durch die jeweiligen Durchlaßöffnungen 9 in der Walzenkörperwandung 8 zu diesem Aufnahmeraum 11 hin gedrückt werden kann. In Fig. 2 zeigt eine Draufsicht auf die beiden Walzenkörper 4, 5 die Verteilung einer Vielzahl von Durchlaßöffnungen 9 in der Walzenkörperwandung 8 und auf dem Walzenkörper 5 ist eine die Haftung des Cellulosenitrats 2 verbessernde Struktur 12 vorgesehen.

Die in Fig. 2 ersichtlichen Durchlaßöffnungen 9 weisen eine kreisrunde Querschnittskontur auf, wobei auch denkbar ist, daß elliptische oder vieleckige Querschnittsformen vorgesehen werden. In einer weiteren denkbaren Ausführung können die Formausnehmungen 6 auch als sacklochförmige Bohrungen oder Nuten (nicht dargestellt) in der Walzenkörperwandung 8 vorgesehen sein, wobei für eine Einzelentnahme des in diesen Sacklöchern gebildeten Granulats ein entsprechendes Zusatzwerkzeug erforderlich werden kann.

Die Seitenansicht des Walzenaggregats 1 gemäß Fig. 4 verdeutlicht in Zusammenschau mit Fig. 1 die Ausförderung (Pfeil G) des rieselfähigen Granulat-Zwischenproduktes 7, wobei an einem Ende des Walzenkörpers 4 eine Auslaßöffnung 13 zur Entnahme vorgesehen ist. Aus diesem Bereich des als Längskanal wirksamen Walzenkörpers 4 kann das Zwischenprodukt 7 besonders einfach dadurch abgeleitet werden, daß der Walzenkörper 4 eine zur Auslaßöffnung 13 hin konisch erweiterte innere Mantelfläche 14 aufweist. In der Darstellung gemäß Fig. 4 wird deutlich, daß die beiden Walzenkörper 4 und 5 eine zur Auslaßöffnung 13 hin geneigte Einbaulage (Winkel W) aufweisen, so daß eine besonders effektive Ausförderung des Zwischenproduktes 7 durch diese Schrägstellung möglich ist.

Die Stirnansicht gemäß Fig. 1 verdeutlicht außerdem, daß der Walzenkörper 4 im Bereich des Aufnahmeraumes 11 bzw. der Auslaßöffnung 13 mit zumindest einem Abstreifer 15 versehen ist, wobei sich dieser in Richtung der Längsmittelebene M der Walzenkörper 4, 5 durch den gesamten Aufnahmeraum 11 erstrecken kann. Denkbar ist auch, daß der Abstreifer 15 eine in Richtung der Längsmittelebene M hin- und hergehende Bewegung ausführt und damit von dem hindurchgedrückten Cellulosenitrat 2' die entsprechenden Granulatteile des Zwischenprodukts 7 in unterschiedlichen Längen L abgetrennt werden. Denkbar ist auch, daß im Bereich der Teilmenge C' (Fig. 3) ein weiterer Abstreifer (nicht dargestellt) im Nahbereich des Walzenkörpers 5 vorgesehen ist und die Walzenkörper 4, 5 zumindest bereichsweise beheizbar bzw. kühlbar sind.

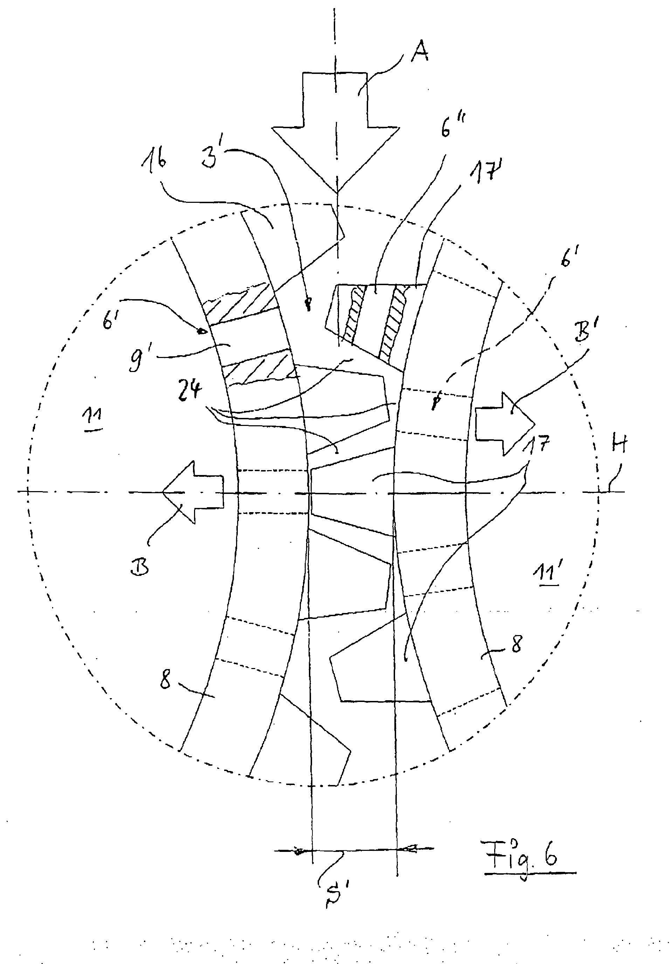

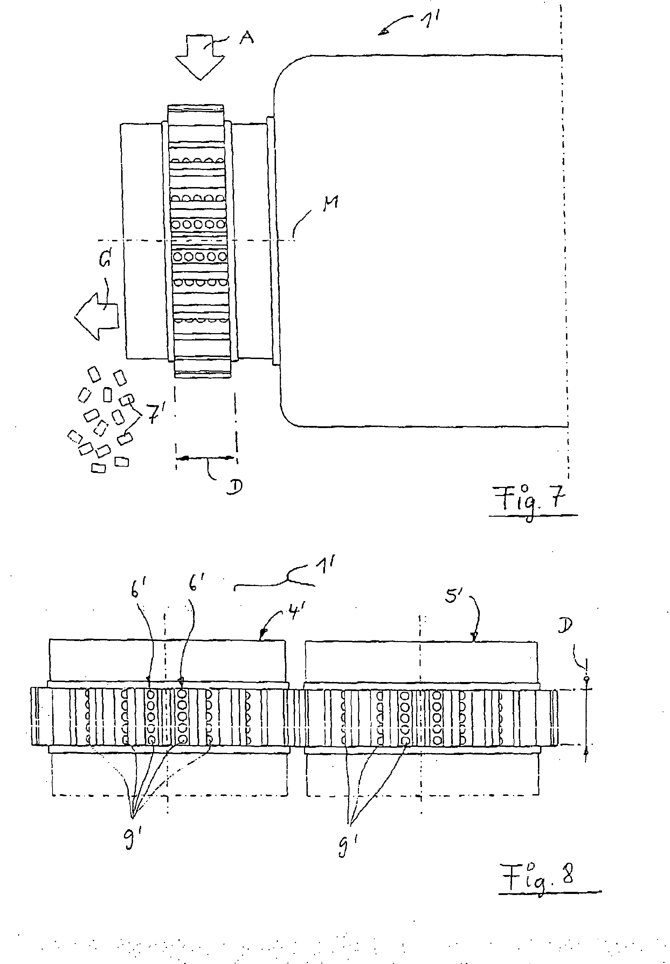

In Fig. 5 ist eine zweite Ausführungsform des Walzenaggregats 1'dargestellt, wobei dessen Walzenkörper 4', 5' am Außenumfang jeweilige nach Art einer Verzahnung kämmende Formansätze 16, 17 mit im Querschnitt weitgehend identischer Kontur aufweisen. Diesen Formansätzen 16, 17 sind am jeweils gegenüberliegenden Walzenkörper jeweilige Aufnahmenuten 18, 19 zugeordnet, in deren bodenseitigen Bereichen jeweilige Formausnehmungen 6' vorgesehen sind. Bei dieser Verfahrensführung wird das vertikal zugeführte Cellulosenitrat 2 mit einer bei Drehung (Pfeil E, F) im Bereich des Walzenspaltes 3' kämmenden Verzahnung gepreßt (Fig. 6), dabei horizontal verlagert (Pfeil B') und als das rieselfähige Zwischenprodukt 7' entnommen (Pfeil G, Fig. 7).

In Fig. 6 sind beide Walzenkörper 4', 5' im Bodenbereich der jeweiligen Aufnahmenuten 18, 19 mit den radialen Durchlaßöffnungen 9' versehen, wobei auch denkbar ist, daß diese an nur einem der Walzenkörper 4, 5 vorgesehen sind. Der Verfahrensablauf bei dieser Herstellungsvariante entspricht im wesentlichen der aus Fig. 1 bis 4 ersichtlichen Bearbeitung. Durch die kämmende Verzahnung 16, 17 ist eine feindosierte Zuführung des Cellulosenitrats 2 in den meanderförmigen Walzenspalt 3' möglich, wobei in einer geometrisch definierten Umformzone 24 eine besonders schonende Verdichtung erfolgt und danach das verdichtete Cellulosenitrat 2' durch die Durchlaßöffnungen 9' in den Aufnahmeraum 11 eingeschoben wird.

Ebenso ist denkbar, daß die am Walzenkörper 4', 5' vorgesehenen radialen Formansätze 16 und 17 ihrerseits jeweilige Formausnehmungen 6" (Fig. 6, an Zahn 17') aufweisen. Damit kann das tangential bei A in den Walzenspalt 3' zugeführte Cellulosenitrat in der Kämmphase der Walzenkörper durch eine tangential fortgesetzte Pressung in diese Formausnehmungen 6" einer oder mehrerer der Formansätze 16, 17 eingedrückt werden. Aus diesen Formausnehmungen 6" kann das Cellulosenitrat dann wahlweise in oder entgegen dieser Füll- bzw. Zuführrichtung ausgefördert werden (nicht dargestellt).

Die vergrößerte Ausschnittsdarstellung gemäß Fig. 6 verdeutlicht, daß die beiden Walzenkörper 4', 5' in axialem Abstand S' so angeordnet sind, daß die Verzahnungsprofile in Form der Formansätze 16 und 17 in jeweiligen den Zahngrund bildenden Aufnahmenuten 18, 19 so zugeordnet sind, daß eine diametrale Lage im Bereich einer der Mittellängsebene M entsprechenden horizontalen Bezugslinie H erreicht ist. Durch diese Eingriffsbedingungen wird das zugeführte und im oberen Bereich des Spaltes 3' erfaßte Cellulosenitrat 2 durch die Formansätze 16 und 17 mitgenommen und in der Verlagerungsrichtung B bis in die jeweiligen inneren Aufnahmeräume 11' der Walzenkörper 4', 5' hindurchgedrückt. In Fig. 7 und 8 zeigen jeweilige Seitenansichten bzw. Draufsichten eine konstruktive Ausführung des Walzenaggregats 1' mit den beiden Walzenkörpern 4', 5', wobei diese eine im Vergleich mit dem Walzenaggregat 1 gemäß Fig. 1 verringerte Bearbeitungsbreite D aufweisen. In einer technischen Anlage können die Abmessungen der Walzenkörper 4', 5' beliebig gewählt werden.

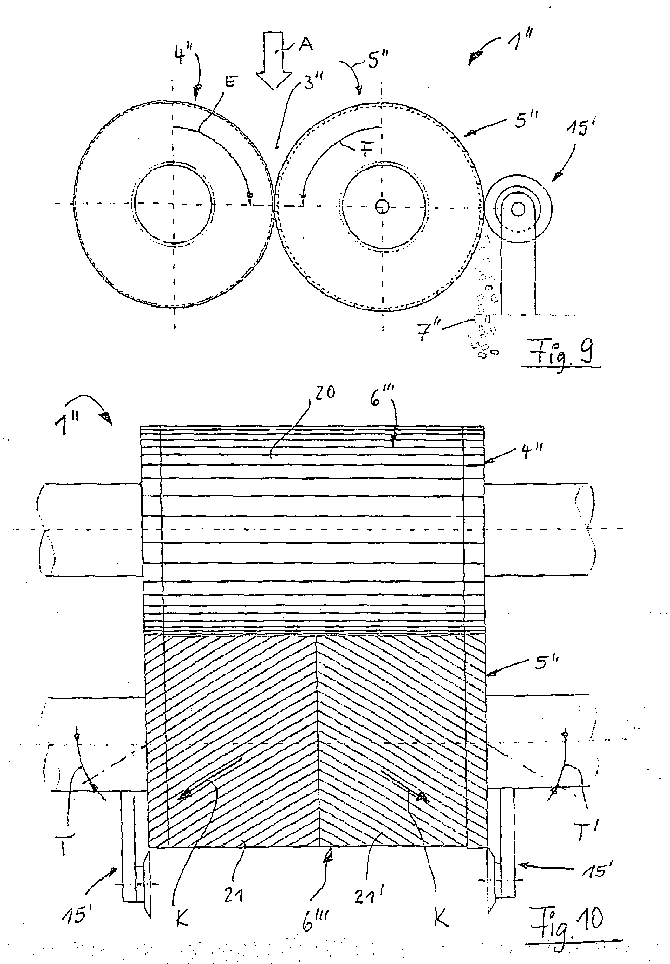

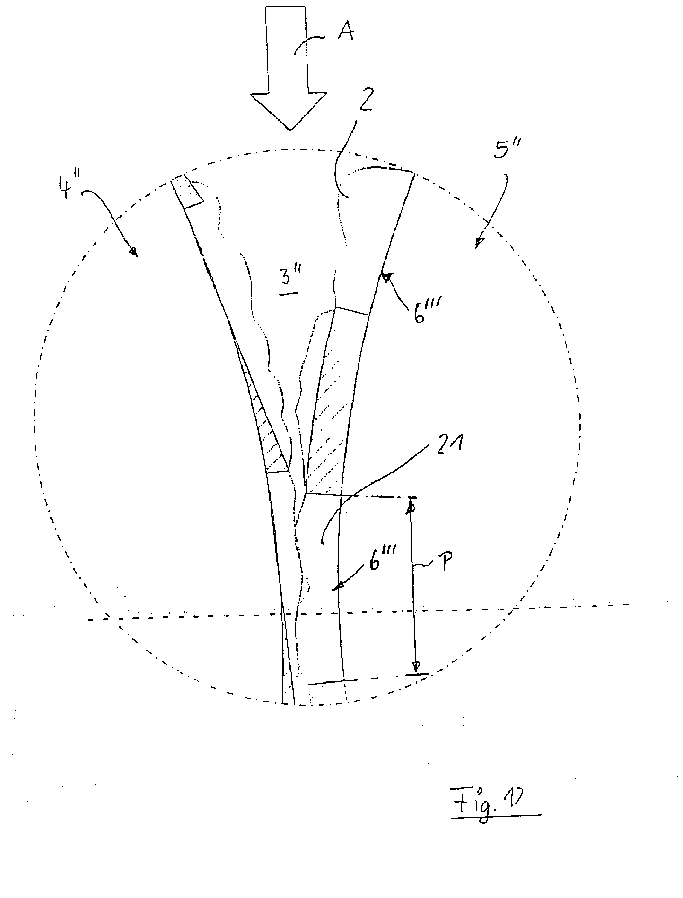

In Fig. 9 bis 12 ist eine dritte Ausführungsform des Walzenaggregats 1" dargestellt, wobei dieses jeweilige Walzenkörper 4", 5" aufweist, von denen zumindest einer mit jeweiligen die Formausnehmungen 6''' bildenden Längsnuten 20 bzw. Längsnutenabschnitten 21, 21' versehen ist (Fig. 10). Die Längsnutenabschnitte 21, 21' sind ausgehend von der Mitte der Walzenkörper 4", 5" mit entgegengesetzter Steigung (Winkel T, T') zu den Enden des Walzenkörpers 4', 5' hin ausgerichtet. Denkbar ist auch, daß die Längsnuten 20, 21, 21' schraubenlinienförmig über die Länge nur eines der Walzenkörper 4" bzw. 5" verlaufen. In Fig. 12 wird deutlich, daß die Walzenkörper 4", 5" im Unterschied zu den Verzahnungen 16, 17 gemäß Fig. 5 nicht ineinandergreifen.

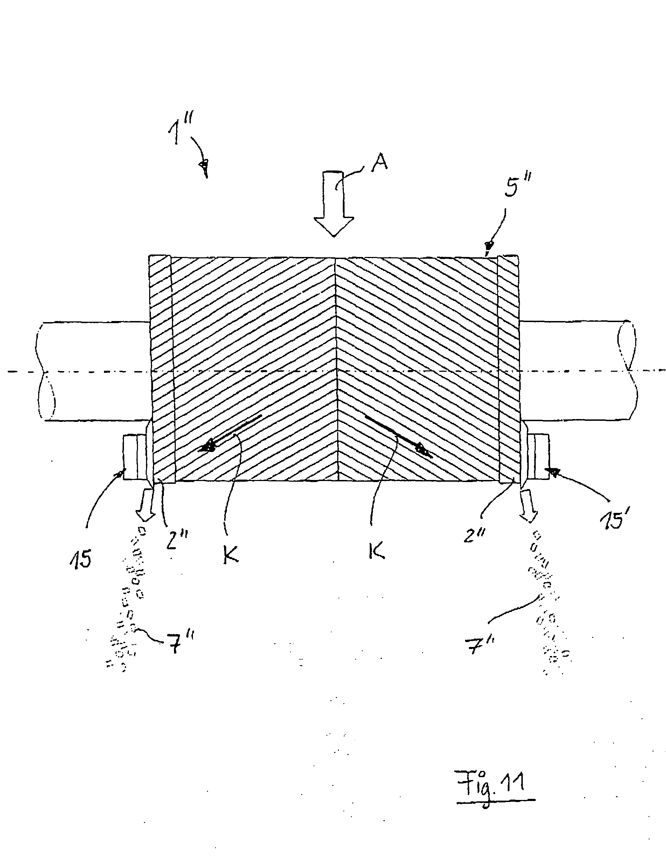

Das in diese Längsnuten 20, 21, 21' vertikal zugeführte Cellulosenitrat 2 (Pfeil A', Fig. 11, Fig. 12) wird im Walzenspalt 3" entsprechend den vorbeschriebenen Ausführungen des Verfahrens zunehmend verdichtet und in die Formausnehmungen 6''' eingedrückt. Dabei erfolgt in den zu den Enden der Walzenkörper 4", 5" hin V-förmig zueinander verlaufenden Längsnuten 21, 21' gleichzeitig eine Verdichtung und Materialverschiebung (Pfeil K). Damit wird zumindest aus den einen entsprechenden Querschnitt (P, Fig. 12) aufweisenden Längsnutenabschnitten 21, 21' ein strangförmiges Zwischenprodukt 2" aus den jeweiligen Enden des Walzenkörpers 5" ausgeschoben. Dabei kann dieser komprimierte NC-Strang mittels eines Abstreifers 15' in die Endform des Granulat-Zwischenproduktes 7" geteilt (Fig. 9, Fig. 11) werden.

Bei der vorbeschriebenen Bearbeitung des phlegmatisierten Cellulosenitrats 2 wird für dieses eine transportoptimale Verdichtungsstruktur erreicht, die nachfolgend eine vorteilhafte Anwendung des rieselfähig ausbringbaren Granulat-Zwischenproduktes 7, 7', 7" für Lacke, Druckfarben, Klebstoffe, pigmentierte Nagellacke o. dgl. Endprodukte gewährleistet.

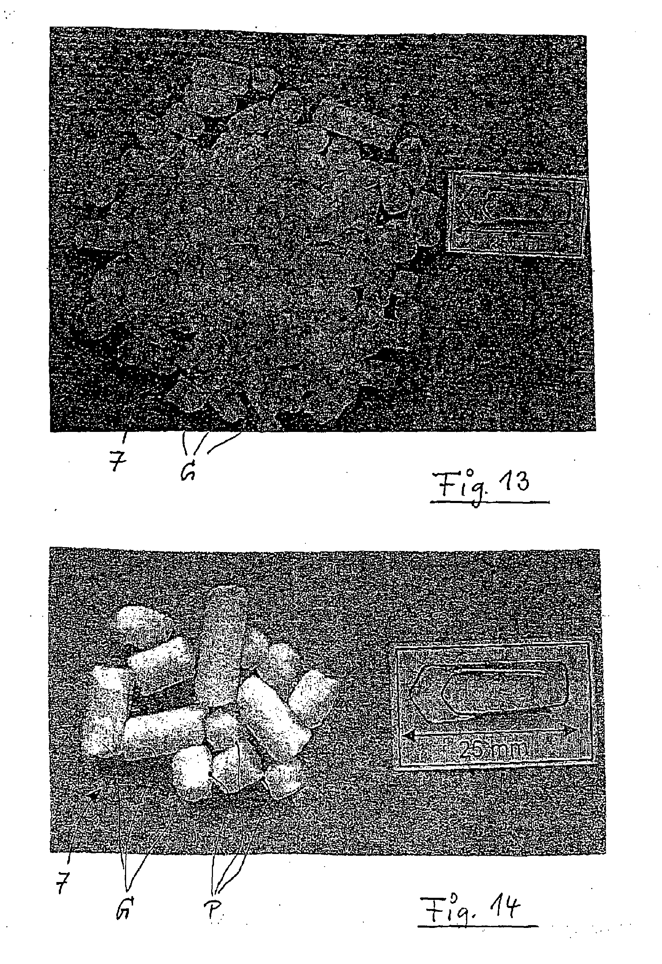

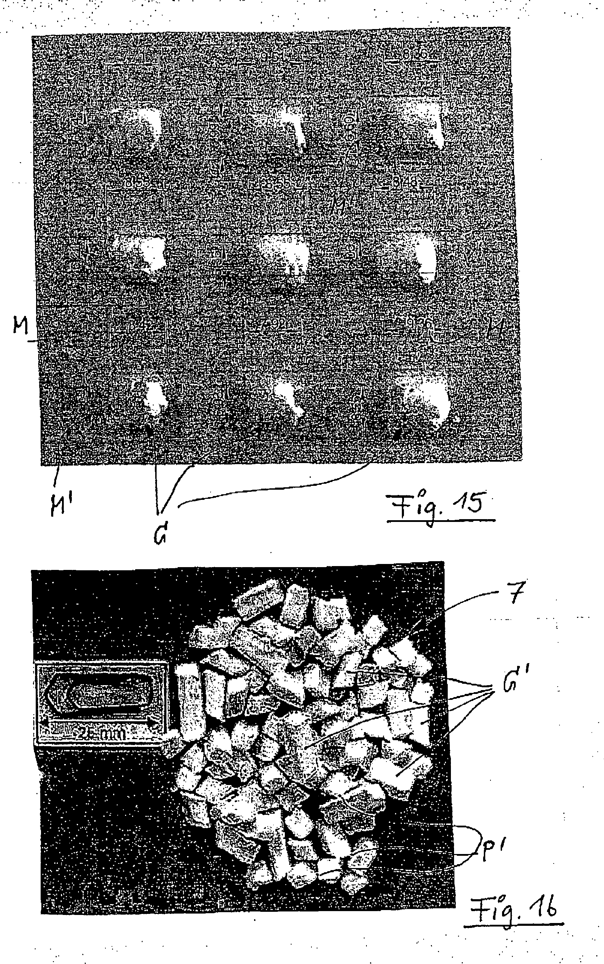

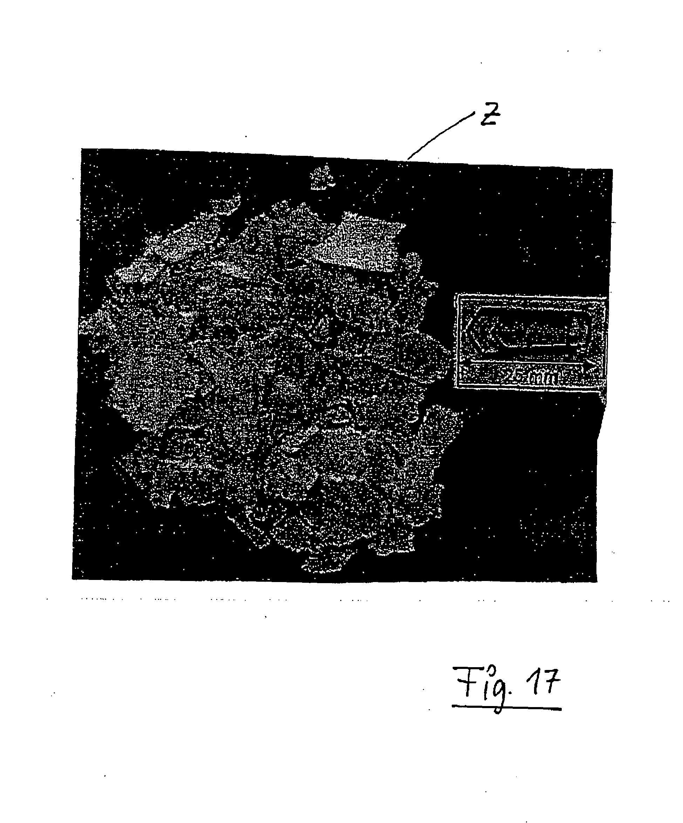

In Fig. 13 ist das rieselfähige Granulat gezeigt, wobei dieses entsprechend der jeweiligen Verfahrensführung (Fig. 1, Fig. 6, Fig. 8) aus einem Gemisch von unterschiedlich großen Einzelteilen G besteht. Fig. 14 verdeutlicht, daß die im wesentlichen als Vollzylinder geformten Teile G als zu transportierendes Zwischenprodukt vorteilhaft wenige Berührungspunkte P aufweisen und damit bei der Abfüllung in einen Transportbehälter bisherige Verblockungen des Granulats (bzw. von Chips, Fig. 17) durch aneinanderklebende Teile G weitgehend vermeidbar sind. In Fig. 15 sind die Teile G einer hergestellten Charge einzeln dargestellt, wobei durch entsprechende Maßangaben M, M' (in mm) die Größenverhältnisse deutlich werden.

In Fig. 16 ist eine Ausführung der Teile G' dargestellt, die im Ergebnis einer Verfahrensführung mit der Anwendung von einen eckigen Querschnitt aufweisenden Formausnehmungen 6 als jeweilige Form-Quader erzeugt werden. Die Darstellung verdeutlicht, daß die quaderförmig gepreßten Teile G' als zu produzierendes Zwischenprodukt vorteilhaft wenige Berührungspunkte P' aufweisen und damit die Verblockungen der bisherigen Chipslieferform (Fig. 17) durch aneinanderklebende Teile G weitgehend vermeidbar sind. Außerdem erreichen die quaderförmig gepreßten Teile G' nach Fig. 16 deutlich höhere Schüttgewichte (50 bis 90 %) als die bisherige Chips-Form. In vorteilhafter Ausführung werden die quaderförmig gepreßten Teile G' mit einem in Fig. 9 dargestellten Walzenaggregat gefertigt.

Zum Vergleich des erfindungsgemäßen Granulats G, G' mit bisher am Markt befindlichen Chip-Zwischenprodukten Z sind diese beispielhaft als Stand der Technik in Fig. 17 abgebildet, wobei die Verblockungsneigung durch plättchenförmige Konturen deutlich wird.

## Patentansprüche

1. Verfahren zur Herstellung von phlegmatisiertem Cellulosenitrat, wobei das angefeuchtete oder weichmacherhaltige Cellulosenitrat (2) mit einem Stickstoffgehalt von 12,6 % oder weniger in einem Walzenspalt (3, 3', 3") zwischen zwei gegensinnig umlaufenden Walzenkörpern (4, 5; 4', 5'; 4", 5") bearbeitet wird, das mit faser- oder wolleartiger Struktur in den Walzenspalt (3, 3', 3") zugeführte Cellulosenitrat (NC) in jeweilige an zumindest einem der Walzenkörper (4, 4', 4") vorgesehene Formausnehmungen (6, 6', 6") eingeformt, dabei weiter verdichtet anschließend entnommen und als ein granuliertes rieselfähiges NC-Zwischenprodukt (7, 7', 7"; G, G') bereitgestellt wird, **dadurch gekennzeichnet, dass** beide Walzenkörper (4', 5') am Außenumfang jeweilige nach Art einer Verzahnung kämmende Formansätze (16, 17) aufweisen und diesen am gegenüberliegenden Walzenkörper Aufnahmenuten (18, 19) mit bodenseitigen Formausnehmungen (6') zugeordnet sind, derart, dass das Cellulosenitrat (2) in der kämmenden Verzahnung gepresst, verlagert und als rieselfähiges Zwischenprodukt (7') ausgefördert wird, wobei zumindest einer der Walzenkörper (4', 5') am Boden der Aufnahmenut (18, 19) jeweilige radiale Durchlassöffnungen (9') aufweist, durch die das Cellulosenitrat (2) mittels der Formansätze (16, 17) des zugeordneten Walzenkörpers hindurchdrückbar ist und danach als Zwischenprodukt (7') bereitgestellt wird.^

2. Verfahren nach Anspruch 1, **dadurch gekennzeichnet, dass** jeweils nur eine Teilmenge des zugeführten Cellulosenitrats (2) eingeformt und verdichtet wird und die verbleibende verdichtete Teilmenge (C, C') aus dem eine Umformzone definierenden Walzenspalt (3, 3', 3") abgeleitet wird.

3. Verfahren nach Anspruch 1 oder 2, **dadurch gekennzeichnet, dass** die zu granuliertem rieselfähigem Cellulosenitrat (2') verdichtete Teilmenge in oder entgegen der Einformrichtung (B) aus der jeweiligen Formausnehmung (6, 6', 6", 6"') entnommen wird.

4. Verfahren nach einem der Ansprüche 1 bis 3, **dadurch gekennzeichnet, dass** das angefeuchtete oder weichmacherhaltige Cellulosenitrat (2) mit im wesentlichen vertikaler Zuführrichtung (A) tangential zwischen die zwei gegenläufigen Walzenkörper (4, 5; 4', 5'; 4", 5") in den Bereich des Walzenspaltes (3, 3', 3") eingeführt, durch eine quer zur Zuführrichtung (A) erfolgende Zwangsführung, Umlenkung und Pressung das Volumen des Cellulosenitrats (2) verringert, dabei Teilmengen des so vorverdichteten Cellulosenitrats (2') zum Erreichen einer vorgesehenen Endverdichtung in jeweilige Formausnehmungen (6, 6', 6", 6"') eingedrückt und danach aus diesen das Cellulosenitrat (2') als das granulierte NC-Zwischenprodukt (7, 7', 7") ausgefördert wird.

5. Verfahren nach einem der Ansprüche 1 bis 4, **dadurch gekennzeichnet, dass** das tangential in den Walzenspalt (3, 3', 3") eingeführte Cellulosenitrat (2) gleichzeitig an beiden Walzenkörpern (4', 5') in jeweilige Formausnehmungen (6') eingepresst und danach entnommen wird.

6. Verfahren nach einem der Ansprüche 1 bis 5, **dadurch gekennzeichnet, dass** das tangential zu den Walzenkörpern (4, 5; 4', 5') zugeführte Cellulosenitrat (2) im Bereich zumindest einer Walzenkörperwandung (8) in jeweilige die Formausnehmungen (6, 6') bildende Durchlassöffnungen (9, 9') radial eingedrückt, durch diese mit weitgehender Formausfüllung hindurchgedrückt und danach am Ende der Durchlassöffnung (9, 9') als das granulierte Zwischenprodukt (7, 7') abgeleitet wird.

7. Verfahren nach Anspruch 6, **dadurch gekennzeichnet, dass** zumindest einer der Walzenkörper (4, 4') als einen inneren Aufnahmeraum (11) aufweisende Hohlwelle ausgebildet ist und das Cellulosenitrat (2) durch die jeweiligen Durchlassöffnungen (9, 9') in der Walzenkörperwandung (8, 8') zu diesem Aufnahmeraum (11) hin gedrückt wird.

8. Vorrichtung zur Herstellung von phlegmatisiertem Cellulosenitrat, die ein zwischen zwei gegensinnig drehbaren Walzenkörpern (4, 5; 4', 5'; 4", 5") eine Bearbeitungsstrecke mit Walzenspalt (3, 3', 3") bildendes Walzenaggregat (1, 1', 1") aufweist, insbesondere zur Durchführung des Verfahrens gemäß einem oder mehreren der Ansprüche 1 bis 7 mit angefeuchtetem oder weichmacherhaltigem Cellulosenitrat (2), wobei zumindest einer der Walzenkörper (4, 5; 4', 5'; 4", 5") mit jeweiligen zumindest eine Teilmenge des in den Walzenspalt (3, 3', 3") eingeführten faserförmigen oder wolleartigen Cellulosenitrats (2) aufnehmenden und als Verdichtungsraum wirksamen Formausnehmungen (6, 6', 6", 6"') versehen ist, aus denen das Cellulosenitrat als granuliertes rieselfähiges Zwischenprodukt (7, 7', 7") entnehmbar ist, **dadurch gekennzeichnet, dass** die Wandungen (8) der beiden Walzenkörper (4', 5') im Querschnitt mit jeweiligen ein Verzahnungsprofil (16, 17) bildenden Formansätzen versehen sind und diese in Gebrauchsstellung zumindest bereichsweise miteinander kämmen, derart, daß das tangential zugeführte Cellulosenitrat (2) zwischen den Verzahnungsprofilen (16, 17, 18, 19) preßbar und von diesen als rieselfähiges Zwischenprodukt (7') ableitbar ist, wobei das Cellulosenitrat (2) in jeweilige im Zahngrund beider Walzenkörper (4', 5') oder in den Formansätzen (17') der Verzahnungsprofile (16, 17) befindliche Durchlassöffnungen (9'; 6") eindrückbar ist.

9. Vorrichtung nach Anspruch 8, **dadurch gekennzeichnet, dass** die Verzahnungsprofile (16, 17) den jeweiligen im Zahngrund befindlichen Durchlassöffnungen (9') des nebengeordneten Walzenkörpers (4', 5') zugeordnet sind, derart, dass das Cellulosenitrat (2) bis in jeweilige innere Aufnahmeräume (11) der Walzenkörper (4', 5') hindurchdrückbar ist.

10. Vorrichtung nach Anspruch 8, **dadurch gekennzeichnet, dass** das Cellulosenitrat (2) durch jeweilige tangential zum Umfang des Walzenkörpers (5') verlaufende Durchlassöffnungen (6") im Verzahnungsprofil (17') mittels des zugeordneten kämmenden Verzahnungsprofils (16) hindurchdrückbar ist.

## Claims

1. Process for the manufacture of desensitised nitrocellulose, the moistened or softener-containing nitrocellulose (2), having a nitrogen content of 12.6% or less, being worked in a gap (3, 3', 3") between two roller-forming bodies (4, 5; 4', 5'; 4", 5") which rotate in opposite directions, the nitrocellulose (NC), which has a fibrous or wool-like structure when fed into the roller gap (3, 3', 3"), being introduced into individual forming openings or recesses (6, 6', 6") provided in at least one of the roller-forming bodies (4, 4', 4"), being further compressed when this takes place and then being removed and made available as a free-flowing granulated intermediate NC product (7, 7', 7"; G, G'), **characterised in that** the two roller-forming bodies (4', 5') have on their outer circumference respective forming projections (16, 17) which mesh after the fashion of gear teeth and the forming projections (16, 17) have associated with them, on the opposite roller-forming body, receiving channels (18, 19) having forming openings or recesses (6') at the bottom, in such a way that the nitrocellulose (2) is subjected to pressure in the meshing teeth, displaced, and forced out as a free-flowing intermediate product (7'), at least one of the roller-forming bodies (4', 5') having, at the bottom of the receiving channels (18, 19), respective radial through-openings (9'), through which the nitrocellulose (2) can be pressed by means of the forming projections (16, 17) on the associated roller-forming body and is then made available as an intermediate product (7').

2. Process according to claim 1, **characterised in that** it is in each case only a part of the nitrocellulose (2) fed in which is introduced and compressed and the remaining amount (C, C'), which has been compressed, is conveyed out of the roller gap (3, 3', 3"), which latter defines a change-of-form zone.

3. Process according to claim 1 or 2, **characterised in that** the part which has been compressed into free-flowing granulated nitrocellulose (2) is removed from the given forming opening or recess (6, 6', 6", 6"') in the direction of introduction (B) or in the opposite direction therefrom.

4. Process according to one of claims 1 to 3, **characterised in that** the moistened or softener-containing nitrocellulose (2) is fed into the region of the roller gap (3, 3', 3"), in a substantially vertical direction of infeed (A), tangentially between the two roller-forming bodies (4, 5; 4', 5'; 4", 5") moving in opposite directions, the volume of the nitrocellulose (2) is reduced by a forced feed, change of direction and subjection to pressure taking placed transversely to the direction of infeed (A), when this happens parts of the nitrocellulose which has been pre-compressed in this way (2') are pressed into respective forming openings or recesses (6, 6', 6", 6"') to produce an intended final compression, and the nitrocellulose (2') is then forced out of these latter as the granulated intermediate NC product (7, 7', 7").

5. Process according to one of claims 1 to 4, **characterised in that** the nitrocellulose (2) which is fed tangentially into the roller gap (3, 3', 3") is pressed into respective forming openings or recesses (6') in both roller-forming bodies (4', 5') simultaneously and is then removed.

6. Process according to one of claims 1 to 5, **characterised in that** the nitrocellulose (2) which is fed in tangentially to the roller-forming bodies (4, 5; 4', 5') is pressed radially into respective through-openings (9, 9') forming the forming openings or recesses (6', 6") in the region of at least one wall (8) of a roller-forming body, is pressed through the said through-openings (9, 9'), when it largely fills these latter, and then, at the end of the through-opening (9, 9'), is conveyed away as the granulated intermediate product (7, 7').

7. Process according to claim 6, **characterised in that** at least one of the roller-forming bodies (4, 4') takes the form of a hollow shaft having an internal receiving space (11) and the nitrocellulose (2) is pressed through the individual through-openings (9, 9') in the wall (8, 8') of the roller-forming body and into this receiving space (11).

8. Apparatus for manufacturing desensitised nitrocellulose, which has a roller assembly (1, 1', 1") which forms, between two roller-forming bodies (4, 5; 4', 5'; 4", 5") able to be turned in opposite directions, a space for working having a roller gap (3, 3', 3"), in particular for carrying out the process according to one or more of claims 1 to 7 with moistened or softener-containing nitrocellulose (2), at least one of the roller-forming bodies (4, 5; 4', 5'; 4", 5") being provided with respective forming openings or recesses (6, 6', 6", 6"') which receive at least a part of the fibrous or wool-like nitrocellulose (2) fed into the roller gap (3, 3', 3") and which act as a compression chamber and from which the nitrocellulose can be removed as a free-flowing granulated intermediate product (7, 7', 7"), **characterised in that** the walls (8) of the two roller-forming bodies (4', 5') are provided in cross-section with respective forming projections which form a toothed profile (16, 17), and the said forming projections mesh with one another at least in a region in the in-use position, in such a way that the nitrocellulose (2), which is fed in tangentially, can be subjected to pressure between the toothed profiles (16, 17, 18, 19) and can be conveyed away from them as a free-flowing intermediate product (7'), the nitrocellulose (2) being able to be pressed into respective through-openings (9'; 6") which are situated at the roots of the teeth on the two roller-forming bodies (4', 5') or in the forming projections (17') of the toothed profiles (16, 17).

9. Apparatus according to claim 8, **characterised in that** the toothed profiles (16, 17) are associated with the respective through-openings (9'), situated at the roots of the teeth, in the roller-forming body (4', 5') situated next to them, in such a way that the nitrocellulose (2) can be pressed through into respective internal receiving chambers (11) in the roller-forming bodies (4', 5').

10. Apparatus according to claim 8, **characterised in that** the nitrocellulose (2) can be pressed through respective through-openings (6") in the toothed profile (17') which extend tangentially to the circumference of the roller-forming body (5'), by means of the associated, meshing, toothed profile (16).

## Revendications

1. Procédé de production de nitrate de cellulose stabilisé, le nitrate de cellulose (2) humidifié ou contenant un plastifiant présentant une teneur en azote de 12,6% ou moins étant façonné dans un espace de cylindre (3, 3', 3") entre deux corps de cylindres (4, 5 ; 4', 5', 4", 5") évoluant en sens contraire, le nitrate de cellulose (NC) présentant une structure de type fibres ou laine, acheminé dans l'espace de cylindre (3, 3', 3"), étant formé dans des évidements de moulage prévus respectivement sur au moins l'un des corps de cylindre (4, 4', 4"), étant ensuite retiré à l'état encore compacté et étant mis à disposition sous forme de produit intermédiaire de NC granulé pouvant s'écouler (7, 7', 7", G, G'), **caractérisé en ce que** les deux corps de cylindre (4', 5') présentent sur le pourtour externe respectivement, des rebords s'engrenant (16, 17) dans le genre de dents, et à ceux-ci sont affectés sur les corps de cylindres opposés, des rainures de réception de telle sorte que le nitrate de cellulose (2) soit comprimé dans l'engrenage à dents, soit déplacé et soit acheminé en tant que produit intermédiaire pouvant s'écouler (7'), au moins l'un des corps de cylindre (4', 5') présentant sur le fond de la rainure de réception (18, 19), des ouvertures débouchantes radiales respectives (9') au travers desquelles le nitrate de cellulose (2) peut être comprimé au moyen des rebords (16, 17) du corps de cylindre affecté et ensuite, être mis à disposition comme produit intermédiaire (7').

2. Procédé selon la revendication 1, **caractérisé en ce que** respectivement, seule une quantité partielle du nitrate de cellulose acheminé (2) est mise en forme et compressée et la quantité partielle compressée restante (C, C') est dérivée d'un espace de cylindre (3, 3', 3") définissant une zone de déformation.

3. Procédé selon la revendication 1 ou 2, **caractérisé en ce que** la quantité partielle compressée en nitrate de cellulose à granuler pouvant s'écouler (2') est prélevée dans ou à l'encontre du dispositif de mise en forme (B) de l'évidement de moulage respectif (6, 6', 6", 6"').

4. Procédé selon l'une des revendications 1 à 3, **caractérisé en ce que** le nitrate de cellulose (2) humidifié ou contenant un plastifiant est introduit avec une direction d'acheminement essentiellement verticale (A) tangentiellement entre les deux corps de cylindres évoluant en sens contraire (4, 5 ; 4', 5' ; 4", 5") dans la région de l'espace de cylindre (3, 3", 3") par guidage forcé s'effectuant perpendiculairement à la direction d'acheminement (A), détournement et pression, le volume du nitrate de cellulose (2) est réduit, des quantités partielles du nitrate de cellulose ainsi précondensé (2') étant compressées pour atteindre une condensation finale prévue dans chaque évidement de moulage (6, 6', 6", 6"') et ensuite le nitrate de cellulose (2') est évacué de celui-ci comme produit intermédiaire de NC granulé (7, 7', 7").

5. Procédé selon l'une des revendications 1 à 4, **caractérisé en ce que** le nitrate de cellulose (2) introduit tangentiellement dans l'espace entre les cylindres (3, 3', 3") est comprimé en même temps sur les deux corps de cylindre (4', 5') dans les évidements de moulage respectifs (6') et est ensuite retiré.

6. Procédé selon l'une des revendications 1 à 5, **caractérisé en ce que** le nitrate de cellulose (2) acheminé tangentiellement aux corps de cylindre (4, 5, 4', 5') est comprimé radialement dans la zone au moins d'une paroi de corps de cylindre (8) dans respectivement les ouvertures débouchantes (9, 9') formant des évidements de moulage (6, 6'), est pressé au travers de celles-ci avec un remplissage large et ensuite est dérivé à la fin de l'ouverture débouchante (9, 9') comme produit intermédiaire granulé (7, 7').

7. Procédé selon la revendication 6, **caractérisé en ce qu'**au moins l'un des corps de cylindre (4, 4') est formé comme un axe creux présentant un espace de réception interne (11) et le nitrate de cellulose (2) est comprimé dans les ouvertures débouchantes respectives (9, 9') dans la paroi de corps de cylindre (8, 8') vers cet espace de réception (11).

8. Dispositif de production de nitrate de cellulose stabilisé qui présente un ensemble de cylindres (1, 1', 1") formant un parcours de traitement avec espace de cylindres (3, 3', 3") entre deux corps de cylindres tournant en sens contraire (4, 5 ; 4', 5' ; 4", 5"), en particulier pour la réalisation du procédé selon une ou plusieurs des revendications 1 à 7 avec du nitrate de cellulose (2) humidifié ou contenant un plastifiant, au moins l'un des corps de cylindre (4, 5 ; 4', 5' ; 4", 5") recevant respectivement au moins une quantité partielle de nitrate de cellulose (2) sous forme de fibres ou de laine introduit dans l'espace entre les cylindres (3, 3', 3") et étant doté d'évidements de moulage (6, 6', 6", 6"') en tant qu'espace de compression à partir desquels le nitrate de cellulose peut être prélevé sous forme de produit intermédiaire granulé pouvant s'écouler (7, 7', 7"), **caractérisé en ce que** les parois (8) des deux corps de cylindre (4', 5') sont dotées perpendiculairement respectivement de rebords formant un profil à dents (16, 17) et ceux-ci, en position de fonctionnement s'engrènent au moins par endroit de telle sorte que le nitrate de cellulose (2) acheminé tangentiellement entre les profils à dents (16, 17, 18, 19) peut être comprimé et sortir de ceux-ci en tant que produit intermédiaire pouvant s'écouler (7'), le nitrate de cellulose (2) pouvant être déformé respectivement dans les deux corps de cylindre (4', 5') dans le fond de dents ou dans des ouvertures débouchantes (9', 6") se trouvant dans les rebords (17') des profils à dents (16, 17).

9. Dispositif selon la revendication 8, **caractérisé en ce que** les profils à dents (16, 17) sont affectés aux ouvertures débouchantes (9') se trouvant respectivement dans le fond des dents, du corps de cylindre adjacent (4', 5') de telle sorte que le nitrate de cellulose (2) peut être compressé jusque dans les espaces de réceptions internes (11) respectifs des corps de cylindres (4', 5').

10. Dispositif selon la revendication 8, **caractérisé en ce que** le nitrate de cellulose (2) peut être comprimé dans des ouvertures débouchantes (6") suivant respectivement tangentiellement le pourtour du corps de cylindre (5') dans le profil à dents (17') au moyen du profil à dent (16) affecté s'engrenant.
